# EUROPEAN PATENT APPLICATION

(11) **EP 1 977 914 A2**
(43) Date of publication of application: **08.10.2008**
(21) Application number: 08004234.4
(22) Date of filing: 06.03.2008
(51) Int. Cl.: B60G 3/20, B60G 7/00, B60G 11/27, B60G 11/28

(54) **Suspension for a wheel of a motor-vehicle, in particular a bus**

(30) Priority: 04.04.2007 IT MI20070698
(71) Applicant: Streparava S.p.A., 25030 Adro (IT)
(72) Inventor: Baroni, Maurizio, 25032 Chiari (IT); Mondini, Claudio, 25030 Erbusco (IT)
(74) Representative: Mayer, Hans Benno

(57) **Abstract**

In a suspension for a wheel (1) of a motor-vehicle, supporting, through a corresponding articulated spindle, V-shape arms (8,7), receiving a spring forming resilient cushioning element (9) on which the motor vehicle body bears, the resilient cushioning element (9) comprises a base (18) bearing on parallel guides (15,16,17) of the V-shape arm (8), thereby forming a bearing surface, the central guide (15) including a hole (10) for receiving a throughgoing clamping screw for clamping the resilient cushioning element (9) at a target position.

## Description

### BACKGROUND OF THE INVENTION

The present invention relates to a suspension for a wheel of a motor-vehicle, in particular a bus.

The above mentioned suspension conventionally comprises quadrilateral mechanisms, also commercially called "MultiLink" mechanisms.

The above suspensions, to be used in particular for supporting motor-vehicle bodies, such as a bus body, are designed for decoupling the movements of the corresponding wheel from those of the vehicle bodywork, thereby leveling out and absorbing bunks and unevenness of a rod mantle.

Said suspensions generally comprise a wheel assembly, mechanical coupling elements and elastic or resilient coupling elements.

The above construction assemblies are strictly related with one another to provide a controlled and proper rolling and perfect braking of the wheel assembly, and moreover a perfect kinematic arrangement of the mechanical coupling elements and said wheel assembly and, finally, properly fit and level out the unevenness of the road mantle, through resilient coupling elements.

Said mechanical coupling elements usually comprise a V-shape arm which, at a joining point thereof, is connected to the wheel support by an articulated spindle.

The prior art teaches moreover to arrange between the motor vehicle body and the top V-shape arm of the suspension, a spring body, generally a resilient cylindric body.

Said resilient or elastic body, in particular, is coupled in a per se known manner to the top V-shape arm through a threaded connection, by using, for example, a screw in element.

Since the resilient performance of a motor vehicle suspension depends, the spring stiffness being the same, on its accurate location along the suspension V-shape arm, it was heretofore necessary to provide several suspension assemblies which, from a mechanical standpoint, were so designed as to precisely meet the requirements of a target motor vehicle.

This requirement required the provision of different suspension assemblies, thereby increasing both the making storing cost of above devices.

### SUMMARY OF THE INVENTION

Accordingly, the aim of the present invention is to overcome the above mentioned drawbacks of the prior art, and provide a suspension assembly for a wheel of a motor vehicle, in particular a bus, which can be easily fitted to specifical technical requirements of the vehicle.

According to the present invention, the above aim is achieved by a suspension for a wheel of a motor vehicle, in particular a bus, supporting, through a corresponding articulated spindle, V-shape arms, said arms supporting a resilient spring forming cushion element thereon a motor vehicle body bears, said resilient cushion element having a resilient cushion element base bearing on parallel guides of said V-shape arms forming a bearing surface, a central guide including a hole for receiving a throughgoing clamping screw for clamping said resilient cushion at a target position.

### BRIEF DESCRIPTION OF THE DRAWINGS

The subject matter according to the present invention will be disclosed in a more detailed manner hereinafter and with reference to an embodiment thereof illustrated in the accompanying drawings, where:
Figure 1 is a perspective view showing a wheel of a motor vehicle and related suspension;
Figure 2 shows, partially in a cross-section and partially in a front view, the top arm of the suspension according to figure 1; and
Figure 3 is a top plan view showing the two top V-shape arms.

### DESCRIPTION OF THE PREFERRED EMBODIMENT

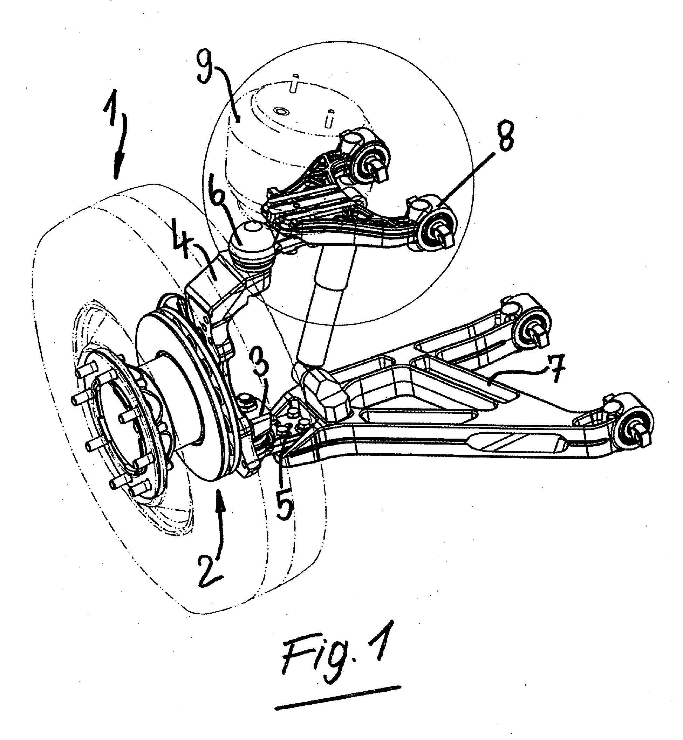

As shown in figure 1, the wheel 1 of a motor vehicle, in particular a bus, is supported by a per se known supporting assembly, generally indicated by the reference 2. The bottom end portion 3 and top end portion 4 of the supporting assembly are coupled, through an articulated spindle 5, respectively 6, to an arm bottom assembly 7 and an arm top assembly 8, which are connected to one another at the corresponding articulated V-shape spindle 5, 6.

The top arm assembly 8 supports a resilient or elastic element 9 which can comprise, for example, an air cushion element, forming an air spring, on which spring the body (not shown) of the motor vehicle bears.

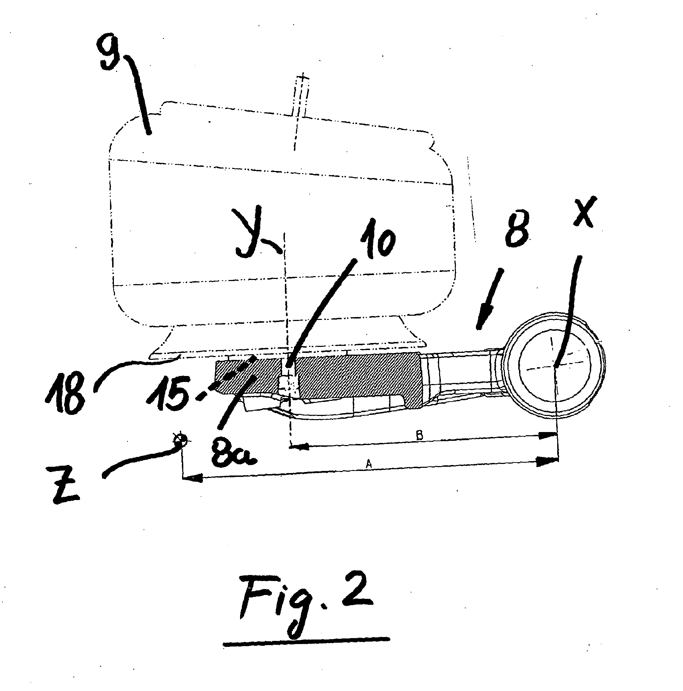

In figure 2, the top arm, generally indicated by the reference number 8, is partially shown by a front view and partially by a cross-sectional view. The front end portion 8a of said arm 8 comprises a precisely arranged throughgoing hole 10. A clamping screw (not shown) for clamping the cushion element 9 being engageable in said throughgoing hole 10.

The arm 8 has a rotary axis X, whereas the throughgoing hole 10 is formed through the front portion 8a of the arm 8 and has an axis Y, the letter Z showing a swinging axis.

Figure 2 shows the distance A of the swinging axis Z to the rotary axis X. The letter B shows the distance between the axis Y and axis X of the hole 10 for receiving said clamping screw (not shown) for clamping said cushion element 9.

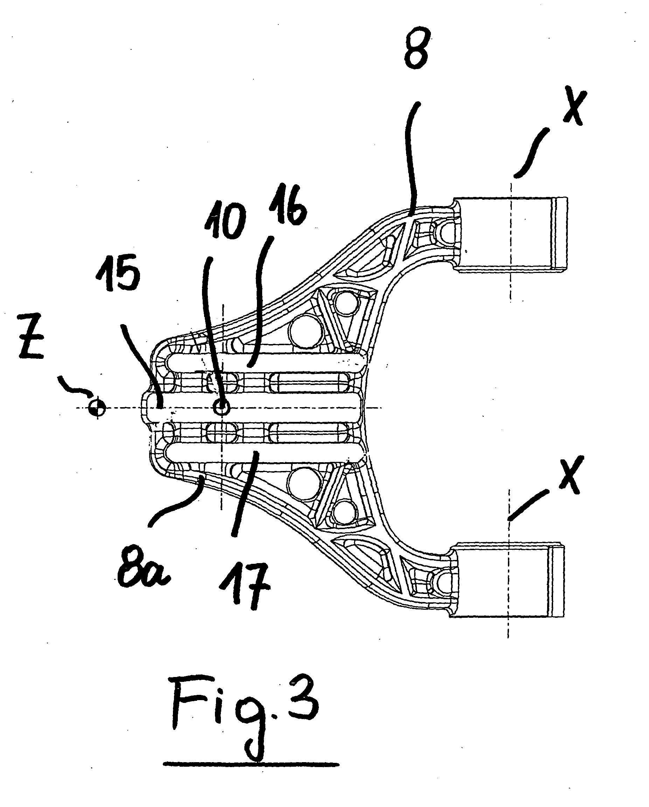

Figure 3 further shows the arms 8 of the suspension assembly, said arm 8 being swingable about the axis X, and is moreover herein shown the rotary point Z thereof.

The front portion 8a of the arms 8 comprises, according to the present invention, on the side thereof facing the cushion element 9, a central guide or sliding block 15, including the throughgoing hole 10.

The central guide 15, in particular, adjoins a side guide 16 and a further side guide 17.

Said guides 15, 16 and 17, which are arranged in the same plane, define a suitable bearing surface for the base 18 forming the base portion of said cushion element 9. Said base 18 is advantageously made as a flat plate.

In this connection it should be apparent that the hole 10 for receiving said clamping screw of said cushion element 9 must be formed at a precise distance B, this position varying depending on the type of the vehicle and on the mechanical stress the vehicle suspension will be subjected to.

Thus, according to the present invention, said double arm 8 will be made as a standard piece including said guides 15, 16 and 17, but without the hole.

Only upon knowing the use of the arm 8 and, accordingly, the type of the vehicle the arm 8 must be applied to, depending on technical considerations related to the specific stress on the suspension, it will be possible to define the precise position of the axis Y and the distance B, and, accordingly, the cushion element 9 clamping corresponding hole 10 will be made at this position (which, of course, can change depending on the vehicle).

Thus, since the arm 8 according to the present invention can be perforated only upon knowing its application depending on the type of the vehicle, it will be possible to use a standard suspension assembly.

## Claims

1. A suspension for a wheel (1) of a motor vehicle, in particular a bus, supporting, through a corresponding articulated spindle (6), V-shape arms (4, 7), said arms (4, 7) supporting a resilient spring forming cushion element (9), thereon a body of said motor vehicle bears, **characterized in that** said resilient cushion element (9) comprises a base (18) bearing on parallel guides (15, 16, 17) forming a bearing surface, and that a central guide (15) of said guides comprises a hole (10) for receiving a throughgoing clamping screw for clamping said resilient cushion element (9) at a target position.
